## Europäisches Patentamt
## European Patent Office
## Office européen des brevets

(11) Numéro de publication: **0 148 802**
**B1**

(12) **FASCICULE DE BREVET EUROPÉEN**

(45) Date de publication du fascicule du brevet:
18.05.88

(51) Int. Cl.⁴: **G 21 C 19/10**

(21) Numéro de dépôt: **85400033.8**

(22) Date de dépôt: **08.01.85**

(54) **Dispositif pour la manutention d'assemblages de combustible nucleaire et assemblage adapté à un tel dispositif.**

(30) Priorité: **11.01.84 FR 8400361**

(43) Date de publication de la demande:
**17.07.85 Bulletin 85/29**

(45) Mention de la délivrance du brevet:
**18.05.88 Bulletin 88/20**

(84) Etats contractants désignés:
**BE DE GB IT**

(56) Documents cité:
**DE-A-1 949 245**
**FR-A-1 395 622**
**FR-A-2 373 858**
**FR-A-2 395 571**
**FR-A-2 413 758**
**US-A-3 990 591**

(73) Titulaire: **COMMISSARIAT A L'ENERGIE ATOMIQUE, 31/33, rue de la Fédération, F-75015 Paris (FR)**
Titulaire: **ELECTRICITE DE FRANCE Service National, 2, rue Louis Murat, F-75008 Paris (FR)**

(72) Inventeur: **Cransac, Jean- Pierre, 127, Village du Soleil, F-13540 Puyricard (FR)**
Inventeur: **Jacquelin, Roland, Montée des Adrechs, F-04100 Manosque (FR)**
Inventeur: **Renaux, Charley, Les Extrées, F-13490 Jouques (FR)**

(74) Mandataire: **Mongrédien, André, c/o BREVATOME 25, rue de Ponthieu, F-75008 Paris (FR)**

## Description

La présente invention se rapporte à un dispositif pour la manutention des assemblages de combustible nucléaire, notamment dans un réacteur à neutrons rapides et à un assemblage prévu pour être utilisé avec un tel dispositif.

Les assemblages constituant le coeur d'un réacteur nucléaire à neutrons rapides comprennent habituellement des boîtiers allongés contenant un faisceau d'aiguilles gainées enfermant de la matière fissile ou fertile. Pour simplifier, on désignera dans la présente demande ces deux types d'assemblages par l'expression "assemblages de combustible nucléaire".

Afin de permettre leur manutention dans le réacteur proprement dit, dans les cellules de stockage annexées à celui-ci, ou même lors du transport ou d'une manutention ultérieure de ces assemblages, les boîtiers comportent à leur extrémité supérieure une tête de préhension qui permet le soulèvement et le transfert de chaque assemblage à l'aide d'un dispositif de manutention approprié.

En ce qui concerne le réacteur proprement dit, il se compose généralement d'une cuve à axe vertical obturée par une dalle horizontale à son extrémité supérieure et remplie d'un métal liquide de refroidissement tel que du sodium, surmontée d'une couche de gaz neutre tel que de l'argon. La cuve contient en outre le coeur du réacteur constitué par le groupement d'un certain nombre d'assemblages de combustible nucléaire disposés selon un réseau hexagonal. Chaque assemblage comporte un pied qui s'engage dans un sommier de supportage reposant sur le fond de la cuve. Le chargement et le déchargement des assemblages sont généralement réalisés au moyen d'un pot de manutention se déplaçant à l'intérieur d'une rampe faisant communiquer l'intérieur de la cuve avec un sas externe généralement situé au-dessus de la dalle.

Dans les réacteurs à neutrons rapides existants, tels que Phénix ou Super-Phénix, la manutention des combustibles entre le coeur du réacteur et le pot de manutention est réalisée grâce à un ringard de manutention et/ou à un bras de manutention suspendus aux bouchons tournants disposés dans la dalle, au-dessus du coeur du réacteur, et dont les axes sont décalés de telle sorte que la rotation combinée de ces bouchons permet d'avoir accès à tous les assemblages constituant le coeur.

Ces ringards, ou ces bras, sont équipés de dispositifs demanutention comportant des griffes de préhension articulées dont l'ouverture et la fermeture sont commandées par une tige rigide qui traverse la dalle. Lorsqu'un assemblage est extrait du coeur ou doit être, introduit dans le coeur, la tige de commande s'élève au-dessus de la dalle d'une hauteur correspondante à l'intérieur d'une enceinte étanche prévue à cet effet au-dessus de la dalle. A titre d'exemple, la partie des dispositifs de manutention des assemblages située au-dessus de la dalle a une hauteur de 7 mètres dans le réacteur Phénix et de 14 mètres dans le réacteur Super Phénix.

La description qui précède fait apparaître clairement que les dispositifs de manutention utilisés actuellement sont d'un encombrement important et donc d'un coût élevé. De plus, la nécessité d'une étanchéité parfaite au niveau de la traversée de la dalle par ces dispositifs rend relativement complexes les opérations de maintenance et de dépannage.

On connaît aussi du document FR-A-2 373 858 un dispositif de manutention de combustible nucléaire comprenant un tube guide d'axe vertical, un graffin mobile en translation à l'interieur du tube guide, et des moyens de levage pour déplacer le graffin à l'interieur du tube guide par l'intermédiaire d'un moyen de liaison soufle. Ce dispositif est également implanté dans le petit bouchon tournant.

Cependant, la place disponible pour le ringard dans le petit bouchon tournant est relativement réduite, compte tenu du fait que celui-ci est traversé par les mécanismes assurant la commande des barres de contrôle servant au pilotage et à l'arrêt du réacteur. Le diamètre hors tout du ringard doit donc être aussi faible que possible.

La conception des dispositifs de manutention doit aussi tenir compte d'un certain nombre de contraintes dûes à la modification de la structure des assemblages résultant de leur irradiation dans le coeur. Ainsi, cette irradiation a pour conséquence un déplacement du réseau formé par les assemblages. De même, les assemblages irradiés sont fréquemment arqués et présentent un certain allongement. En outre, les dispositifs de manutention doivent permettre d'orienter l'assemblage de ± 180°.

Enfin, indépendamment de toutes les contraintes qui viennent d'être mentionnées, les dispositifs de manutention des assemblages doivent présenter une sécurité de préhension absolue afin que l'assemblage ne puisse en aucun cas chuter lors de sa manutention.

La présente invention a précisément pour objet un dispositif de manutention ne présentant pas les inconvénients des dispositifs selon la technique antérieure et répondant à toutes les exigences qui viennent d'être mentionnées. En particulier, elle permet de réaliser, de façon plus économique que ne l'autorisait la technique antérieure, l'installation de manutention des assemblages dans un réacteur nucléaire à neutrons rapides, décrite dans le EP-A-0 046 429. De plus, bien que le dispositif selon l'invention soit particulièrement adapté à la manutention des assemblages à l'intérieur même de la cuve d'un réacteur à neutrons rapides, on comprendra qu'il n'est pas limité à cette application préférentielle et qu'il peut aussi être utilisé pour toute autre manutention des assemblages devant être effectuée hors de la cuve du réacteur.

A cet effet et conformément à l'invention, il est proposé un dispositif de manutention d'assemblage de combustible nucléaire, comprenant un tube guide d'axe sensiblement vertical, un grappin capable de saisir un assemblage, mobile en translation à l'intérieur du tube guide des moyens de levage pour déplacer le grappin à l'intérieur du tube guide par l'intermédiaire d'un moyen de liaison souple, caractérisé en ce que le grappin est solidarisé en rotation avec ce tube, et qu'il saisi ledit assemblage en agissant sur un moyen d'actionnement commandant la rotation de l'ensemble tube guide-grappin, ce dernier étant muni d'un nez de préhension pourvu de moyens pour saisir l'assemblage sous l'éffet d'une rotation du grappin autour de l'axe du tube guide.

Afin d'éviter tout risque d'échappement accidentel des assemblages en cours de manutention, le tube guide comporte des moyens de guidage de l'assemblage interdisant la rotation de celui-ci dans le tube guide.

Selon une première variante de réalisation de l'invention, ces moyens de guidage sont situés à un niveau tel qu'ils n'agissent sur l'assemblage que lorsque celui-ci est dégagé d'un réseau, formé par exemple par le coeur du réacteur, dans lequel il est normalement immobilisé en rotation. Le tube guide est alors monté directement de façon tournante sur un organe de supportage.

Selon une deuxième variante de réalisation de l'invention, les moyens de guidage sont situés à un niveau tel qu'ils agissent sur l'assemblage lorsque celui-ci est encore engagé dans le réseau dans lequel il est normalement immobilisé en rotation. Dans ce cas, pour tenir compte de la déformation des assemblages après irradiation, le tube guide est alors monté de façon tournante sur un organe de supportage par l'intermédiaire de moyens de liaison autorisant un mouvement pendulaire.

Dans un mode de réalisation préféré de l'invention permettant également de tenir compte des déformations des assemblages irradiés, le grappin comporte un chariot guidé par au moins un rail de guidage à l'intérieur du tube guide, et des moyens de supportage du nez de préhension par le chariot autorisant un mouvement pendulaire du nez de préhension par rapport au chariot.

L'invention concerne également un assemblage prévu pour être utilisé avec un tel dispositif de manutention, cet assemblage comprenant une tête d'assemblage, une collerette munie d'encoches étant formée à l'extrémité supérieure d'un passage axial débouchant à l'extrémité supérieure de la tête d'assemblage.

Dans l'application du dispositif selon l'invention à la manutention des assemblages à l'intérieur de la cuve d'un réacteur nucléaire à neutrons rapides contenant le coeur du réacteur, ladite cuve étant obturée par une dalle et des bouchons supportant ce dispositif, les moyens de levage et les moyens de préhension sont places dans un logement situé dans l'épaisseur de l'un desdits bouchons, selon l'axe du tube guide, et obturé par un couvercle étanche. On réalise ainsi un ringard supporté de préférence par le petit bouchon tournant.

Dans cette même application, le tube guide peut être supporté de façon tournante par une structure rigide en forme d'équerre suspendue à la dalle par l'intermédiaire de moyens d'orientation de ladite structure autour d'un deuxième axe vertical décalé par rapport à l'axe du tube guide, les moyens de levage, les moyens de préhension et les moyens d'orientation étant placés juste au-dessus d'un logement situé dans l'épaisseur de l'un des bouchons, selon le deuxième axe vertical, à l'intérieur d'un couvercle étanche obturant ce logement. On réalise ainsi un bras de préhension qui peut être suspendu à l'un des bouchons tournants.

Bien entendu, les deux modes de réalisation du dispositif selon l'invention qui viennent d'être mentionnés à propos de l'application de ce dispositif à la manutention des assemblages à l'intérieur de la cuve du réacteur peuvent être utilisés conjointement, par exemple pour transférer les assemblages suivant la méthode décrite par le brevet ci-dessus référencé.

Dans un autre mode de réalisation de l'invention appliqué à la manutention des assemblages entre au moins deux postes surplombés par une dalle comportant au moins un passage au droit de chaque poste, le tube guide est logé dans une hotte apte à se deplacer sur la dalle pour venir se placer successivement au-dessus de chaque ouverture, le tube guide étant lui-même mobile en translation à l'intérieur de la hotte entre une position haute de transport et une position basse de préhension, lesdits moyens de préhension étant en prise avec le tube guide seulement lorsque celui-ci est en position basse.

Dans ce cas, le tube guide comporte de préférence à son extrémité supérieure au moins une série de roulettes externes en appui sur l'une de deux séries de rails de guidage à l'intérieur de la hotte, les moyens de préhension commandant la rotation d'un cylindre placé à l'extrémité inférieure de la hotte et comportant sur sa face interne une série de rails de guidage sur lesquels viennent en appui lesdites roulettes externes lorsque le tube guide est en position basse.

Le dispositif selon l'invention peut alors comprendre des moyens pour solidariser alternativement le grappin du tube guide lorsque ce dernier n'est pas en position basse et pour solidariser le tube guide dudit cylindre lorsque le tube guide est en position basse.

On décrira maintenant, à titre d'exemple non limitatif, deux modes de réalisation préférés de l'invention en se référant aux dessins annexés dans lesquels:

- la figure 1 est une vue en coupe verticale représentant de façon schématique un réacteur nucléaire à neutrons rapides équipé d'un ringard et d'un bras de manutention conformes à l'invention;
- la figure 2 est une vue en coupe longitudinale à plus grande échelle dont les parties gauche et droite représentent respectivement le haut et le bas du ringard équipant le réacteur de la figure 1;

la figure 3 est une vue à plus grande échelle, en coupe selon la ligne III-III de la figure 2;

- la figure 4 est une vue en perspective éclatée montrant l'extrémité inférieure du ringard de la figure 2, lorsque le nez du grappin du ringard est introduit dans la tête de l'un des assemblages du coeur du réacteur;

- la figure 5 est une vue en perspective comparable à la figure 4 montrant le guidage d'un assemblage suspendu au grappin à l'intérieur du tube guide du ringard, ce tube guide étant seulement esquissé en traits mixtes pour faciliter la lecture de la figure;

- la figure 6 est une vue en coupe longitudinale partielle du bras de manutention utilisé dans le réacteur de la figure 1;

- la figure 7 est une vue en coupe longitudinale à plus grande échelle de la partie supérieure du bras représentée sur la figure 6;

- la figure 8 est une vue en coupe longitudinale comparable à la figure 2, dont les parties gauche et droite representent respectivement le haut et le bas d'une hotte de manutention en gaz entre le réacteur et un poste de conditionnement, cette hotte étant réalisée conformément à l'invention;

- la figure 9 représente à plus grande échelle la partie haute de la hotte de la figure 8, lorsque le grappin et le tube guide sont en position haute; et

- la figure 10 représente à la même échelle que la figure 9 la partie basse de la hotte lorsque le tube guide est en position basse, le grappin restant en position haute à l'intérieur du tube guide.

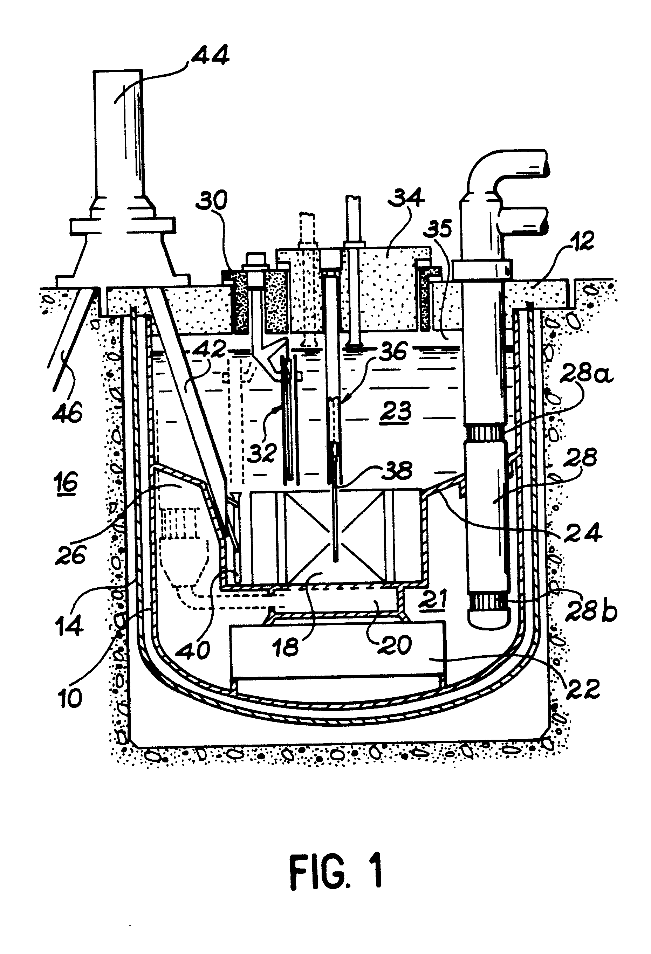

De façon connue, le réacteur nucléaire à neutrons rapides représenté sur la figure 1 comprend une cuve principale 10, d'axe vertical, obturée à son extrémité supérieure par une dalle de fermeture 12 à laquelle est généralement suspendue la cuve principale 10 ainsi qu'une cuve de sécurité 14 doublant cette dernière. Le rebord périphérique de la dalle 12 repose sur une enceinte de béton 16 définissant un puits de cuve dans lequel sont logées les cuves 10 et 14.

A l'intérieur de la cuve principale 10 est disposé le coeur 18 du réacteur, qui repose sur le fond de la cuve 10 par l'intermédiaire d'une structure de supportage comportant un sommier d'alimentation 20 et un platelage 22. La cuve 10 est remplie sur la majeure partie de sa hauteur d'un métal liquide généralement constitué par du sodium et surmonté d'un ciel de gaz neutre 35 tel que de l'argon. En outre, la cuve principale 10 est séparée dans le sens de la hauteur en une zone inférieure froide 21 et une zone supérieure chaude 23 par une cuve interne 24.

La circulation du métal liquide à l'intérieur de la cuve 10 s'effectue au moyen d'un certain nombre de pompes primaires 26 qui aspirent le métal liquide relativement froid contenu dans la zone inférieure 21 pour le refouler dans le sommier d'alimentation 20, de façon à le faire circuler de bas en haut dans le coeur 18 du réacteur. Le métal liquide ainsi réchauffé parvient dans la zone supérieure 23 pour pénétrer par des orifices d'entrée 28a dans des échangeurs de chaleur 28. A l'intérieur des échangeurs, le métal liquide chaud transmet la chaleur qu'il véhicule à un fluide secondaire constitué généralement par un métal liquide tel que du sodium. Le métal liquide ainsi refroidi sort des échangeurs 28 par des orifices de sortie 28b débouchant dans la zone 21, avant d'être repris par les pompes 26 pour être injecté dans le sommier 20 d'alimentation du coeur 18 du réacteur.

La figure 1 montre comment le dispositif objet de l'invention peut permettre la réalisation de l'installation de manutention décrite dans EP-A-0 046 429. Ainsi un grand bouchon tournant 30 logé dans une ouverture formée dans la dalle 12, au-dessus du coeur 18 du réacteur, supporte un bras de manutention 32 et un petit bouchon tournant 34 logé dans une ouverture formée dans le bouchon 30 et d'axe décalé par rapport à l'axe de rotation de ce dernier, supporte un ringard de manutention 36. Comme on l'a mentionné dans la demande de brevet précitée, des rotations combinées des bouchons 30 et 34 permettent, à l'aide du ringard 36 et du bras 32, de transporter en une ou deux étapes un assemblage 38 quelconque du coeur du réacteur 18 jusqu'à un pot de manutention 40 placé à la périphérie du coeur 18, et inversement.

Sur la figure 1, on voit également une partie du dispositif de manutention des assemblages permettant de transférer ces assemblages depuis l'intérieur de la cuve 10 jusqu'à une cellule annexe (non représentée). Cette partie visible de l'installation de manutention comprend une première rampe inclinée 42, par laquelle le pot 40 peut être transféré depuis la périphérie du coeur 18, dans une hotte pivotante 44 située au-dessus de la dalle 12. Après avoir été placé dans le pot 40 à l'aide du bras de manutention 32, un assemblage à évacuer est ainsi transporté dans la rampe 42 jusqu'à la hotte 44. Une deuxième rampe inclinée 46 débouchant également dans la hotte 44 communique avec une cellule annexe (non représentée) dans laquelle l'assemblage peut ainsi être évacué. Bien entendu, la manutention inverse permet d'assurer le chargement du réacteur.

Dans l'état actuel de la technique, les dispositifs de manutention tels que le ringard 36 et le bras de manutention 32 réalisent la préhension des têtes des assemblages à l'aide de griffes articulées dont l'ouverture et la fermeture sont commandées par une tige rigide qui se prolonge au-dessus de la dalle dans des enceintes étanches présentant une hauteur sensiblement supérieure à celle d'un assemblage.

Conformément à l'invention, les parties des dispositifs de manutention situées au-dessus de la dalle sont pratiquement supprimées et le risque d'échappement d'un assemblage en cours de manutention est pratiquement nul.

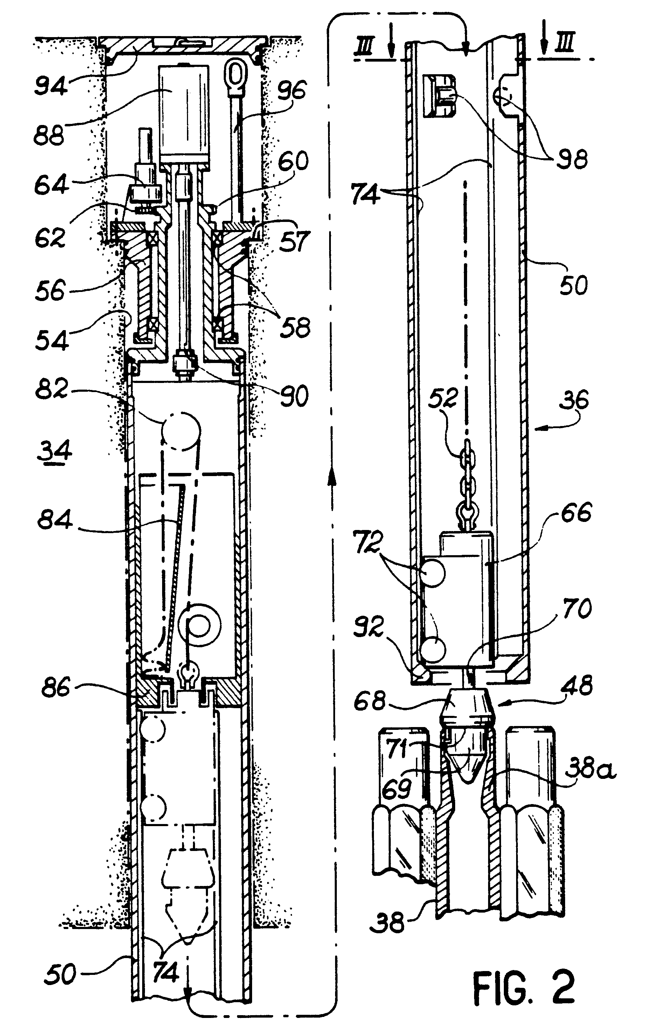

Comme l'illustre la figure 2 dans le cas du ringard 36, ce résultat est obtenu en réalisant la préhension de la tête d'assemblage par un mouvement de rotation qui est transmis au grappin 48 par l'intermédiaire d'un tube guide 50 immobilisé en translation par rapport à la dalle 12, ou plus précisément, au bouchon 34 qui le supporte et par le fait que le déplacement du grappin 48 à l'intérieur du tube guide 50 est commandé par l'intermédiaire d'un lien souple tel qu'une chaîne 52.

De façon plus précise, on voit sur la figure 2 que le bouchon 34 est traversé de part en part par un passage cylindrique 54 dont l'axe vertical est confondu avec celui du tube guide 50. L'extrémité supérieure, de diamètre réduit, du tube guide 50 est supportée de façon tournante dans le passage 54 par l'intermédiaire d'un manchon 56 fixé sur un épaulement 57 formé dans ce passage et par des paliers 58. Au-dessus du manchon 56, le tube guide 50 comporte une couronne dentée 60 sur laquelle vient s'engréner un pignon 62 dont la rotation est commandée par un motoréducteur 64 fixé sur le manchon 56. Comme on le verra par la suite, le motoréducteur 64 sert à commander la préhension de la tête 38a d'un assemblage 38 par le ringard 36.

On voit aussi sur la figure 2 que le grappin 48 comprend un chariot 66 assurant le guidage du grappin à l'intérieur du tube guide 50 tout en empêchant sa rotation, un nez de préhension 68 et une liaison pendulaire 70 par laquelle le nez 68 est suspendu au chariot 66.

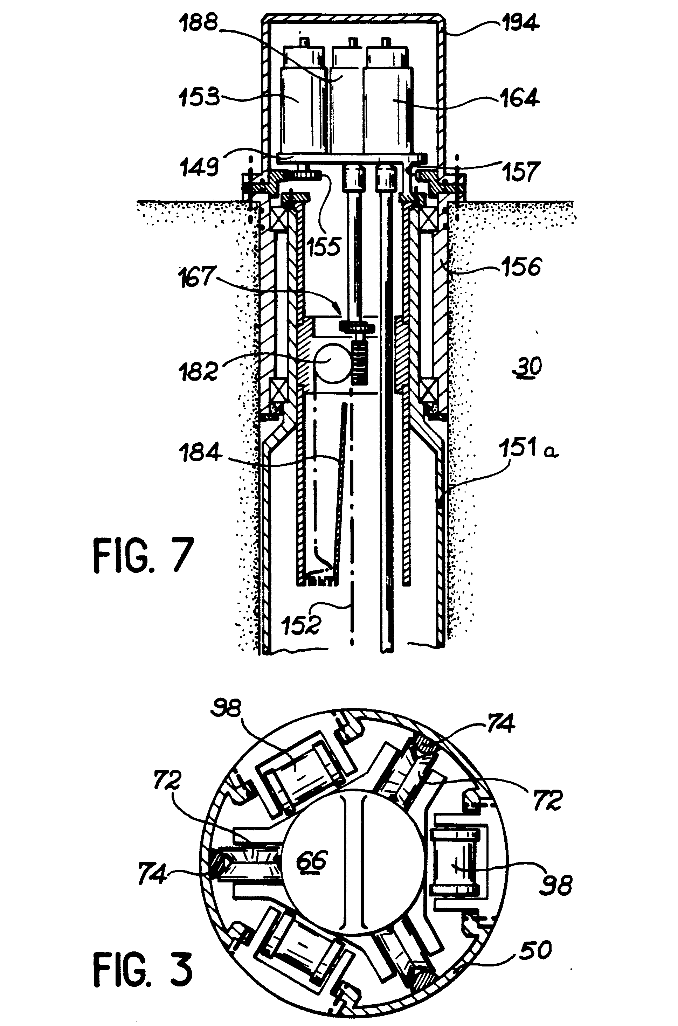

Comme l'illustrent les figures 2 à 6, le chariot 66 comporte deux jeux de trois roulettes 72 disposées à 120° les unes par rapport aux autres. Chacune des roulettes comporte une gorge en forme de V qui roule sur un rail 74, de section semi-circulaire (figure 3), qui s'étend verticalement à l'intérieur du tube guide 50 sur toute la hauteur de celui-ci. La coopération des deux jeux de trois roulettes 72 avec les trois rails 74 permet ainsi d'assurer le guidage vertical du chariot 66 et d'empêcher la rotation de celui-ci à l'intérieur du tube guide.

La liaison pendulaire 70 par laquelle le nez 68 du grappin est suspendu au chariot 66 se compose d'une tige articulée respectivement sur le nez et sur le chariot par l'intermédiaire de deux systèmes à cardan (non représentés), de conception classique. Le nez 68 reste ainsi solidaire en rotation du chariot 66 mais peut se déplacer latéralement et prendre une certaine orientation angulaire par rapport au chariot 66, autour de deux axes orthogonaux. Le nez du grappin peut ainsi être verrouillé sur la tête de l'assemblage même lorsque celui-ci présente une certaine déformation après irradiation.

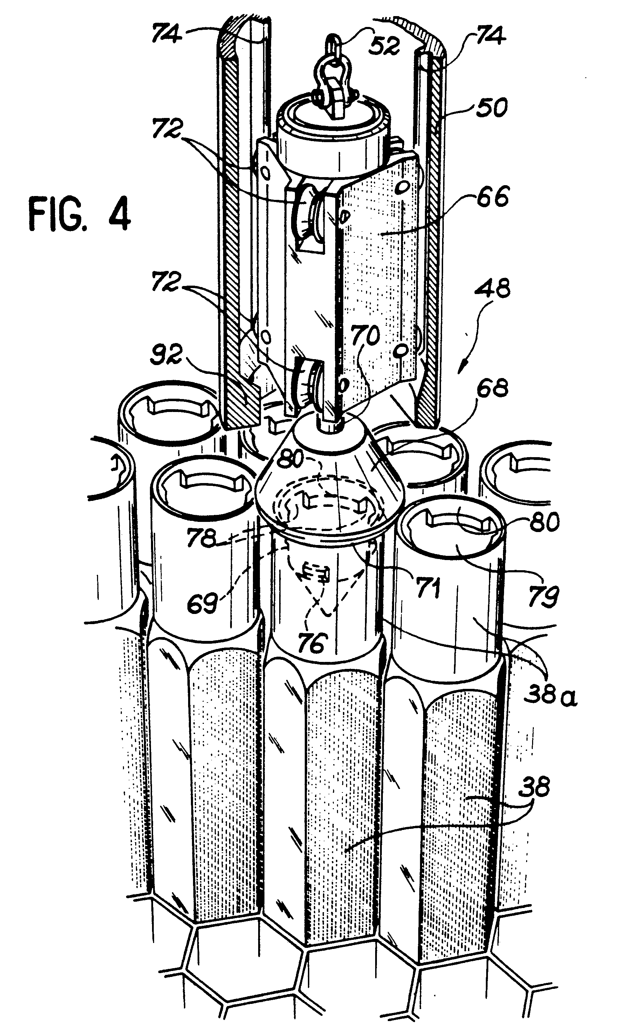

Afin de réaliser la préhension d'un assemblage 38 par une rotation du nez 68 du grappin, on utilise un système du type "à baïonnette". Comme on le voit sur la figure 4, la tête 38a de chacun des assemblages comporte, à l'extrémité supérieure du passage central 79 assurant normalement l'écoulement du métal liquide vers la zone supérieure 23 de la cuve du réacteur, une collerette 80 percée, par exemple, de trois encoches 78 disposées à 120° l'une par rapport à l'autre.

De façon comparable, le nez 68 du grappin présente à son extrémité inférieure une partie sensiblement cylindrique 69 apte à être introduite dans la collerette 80. Afin de faciliter son introduction dans la tête de l'assemblage, cette partie 69 se prolonge de préférence par une partie inférieure conique. A son extrémité inférieure, la partie cylindrique 69 porte des ergots de préhension 76 disposés de façon à traverser les encoches 78 lorsque le nez du grappin est introduit dans un assemblage. Au-dessus de la partie 69, le nez 68 du grappin comporte un épaulement 71 venant en butée sur la face supérieure de l'assemblage lorsque la partie 69 est introduite dans la tête de l'assemblage.

Grâce à ces caractéristiques, on comprend que lorsque la partie 69 du nez est introduite dans la tête 38a d'un assemblage, l'orientation du nez étant alors telle que les ergots 76 se trouvent en face des encoches 78, une simple rotation du nez 68 permet d'amener les ergots 76 en prise sur la collerette 80. Dans la variante représentée dans laquelle la tête de l'assemblage et le nez du grappin comportent respectivement trois encoches 78 et trois ergots de préhension 76, cette rotation sera d'environ 60°.

Compte tenu des caractéristiques décrites précédemment, on comprend que la préhension d'un assemblage peut être obtenue en agissant sur le motoréducteur 64, qui commande la rotation du tube guide 50 et, par l'intermédiaire du chariot 66 et de la liaison 70, du nez 68 du grappin 48.

Afin de déplacer le chariot 66 à l'intérieur du tube guide 36 pour réaliser le levage et la descente de l'assemblage à manipuler, on a déjà mentionné précédemment que l'on déplace le grappin 48 au moyen d'un lien souple tel qu'une chaîne 52. De façon plus précise, l'extrémité inférieure de la chaîne 52 est fixée au chariot 66, l'entraînement de la chaîne étant réalisé au moyen d'une roue à empreintes 82 dont l'axe est supporté par le tube guide 50, juste en-dessous du manchon 56. L'autre brin de la chaîne 52, généralement appelé "brin mou", est reçu dans un puits de chaîne 84. Le fond du puits 84 est constitué par une partie d'une butée 86 définissant la position haute du grappin comme on l'a représenté en traits mixtes sur la figure 2. Le grappin est dans cette position lorsque le réacteur est en fonctionnement. La partie supérieure du chariot 66 vient alors se loger dans la butée 86 pour réaliser une étanchéité aux vapeurs de sodium.

La commande en rotation de la roue à empreintes 82 est réalisée par un second motoréducteur 88 monté à l'extrémité supérieure du tube guide 50 et dont l'arbre de sortie vertical 90 entraîne l'axe portant ladite roue, par l'intermédiaire de pignons à renvoi d'angle (non représentés) ou de tout système de transmission équivalent.

La mise en oeuvre du motoréducteur 88 permet ainsi, par l'intermédiaire de la chaîne 52 d'assurer la montée et la descente du grappin 48 entre la position haute représentée en traits mixtes et la position basse représentée en traits pleins sur la figure 2. Une collerette 92 formée à l'extrémité inférieure du tube guide 50 sert de butée au chariot 66 dans cette position basse.

Comme l'illustre la figure 2, les motoréducteurs 64 et 88 assurant la commande du ringard 36 sont logés en totalité à l'intérieur du passage 54 formé dans le bouchon 34, de même que le puits de cuve 84 et que le grappin 48, lorsqu'il est en position haute. L'étanchéité de la traversée du bouchon peut ainsi être obtenue facilement au moyen d'un couvercle 94 obturant l'extrémité supérieure du passage 54 et dont l'enlèvement permet si nécessaire de réaliser la maintenance du grappin, qui peut éventuellement être extrait du réacteur, par exemple grâce à un système de préhension tel que 96 solidaire du manchon 56.

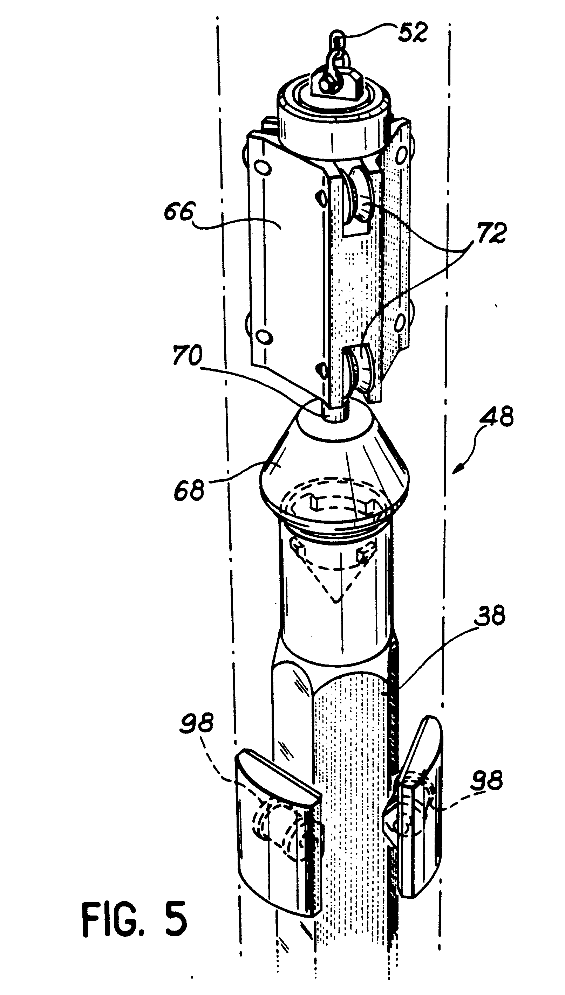

Afin d'éviter un déverrouillage accidentel de l'assemblage par rapport au nez de préhension 68, on voit notamment sur les figures 3 et 5 qu'il est prévu à l'intérieur du tube guide 50 au moins une série de trois galets 98 conçue pour venir en appui sur trois faces non adjacentes du boîtier hexagonal de l'assemblage 38 manipulé.

Etant donné que la rotation de l'assemblage 38 par rapport au grappin 48 est impossible tant que l'assemblage reste imbriqué dans le réseau formé par le coeur du réacteur, les galets 98 peuvent être situés à une hauteur telle qu'ils n'interviennent qu'au-delà de cette limite. Dans ce cas, le manchon 56 par lequel le tube guide 50 est suspendu au bouchon 34 peut être fixé directement sur celui-ci. En effet, une éventuelle déformation de l'assemblage est alors prise en compte en totalité par la liaison pendulaire 70.

Au contraire, si les galets 98 sont disposés suffisamment bas à l'intérieur du tube 50 pour venir en appui sur les faces de l'assemblage avant que celui-ci n'ait quitté le réseau formé dans le coeur par les autres assemblages, il est nécessaire de tenir compte d'une éventuelle déformation des assemblages résultant de leur irradiation. Pour cette raison, la fixation du manchon 56 sur le bouchon 34 sera alors réalisée de préférence par l'intermédiaire d'un dispositif du type cardan ou d'un dispositif souple permettant au tube d'effectuer un mouvement pendulaire par rapport au bouchon. Un tel dispositif est parfaitement connu et ne sera donc pas décrit dans la demande. Il sera situé de préférence entre le manchon 56 et le bouchon 34.

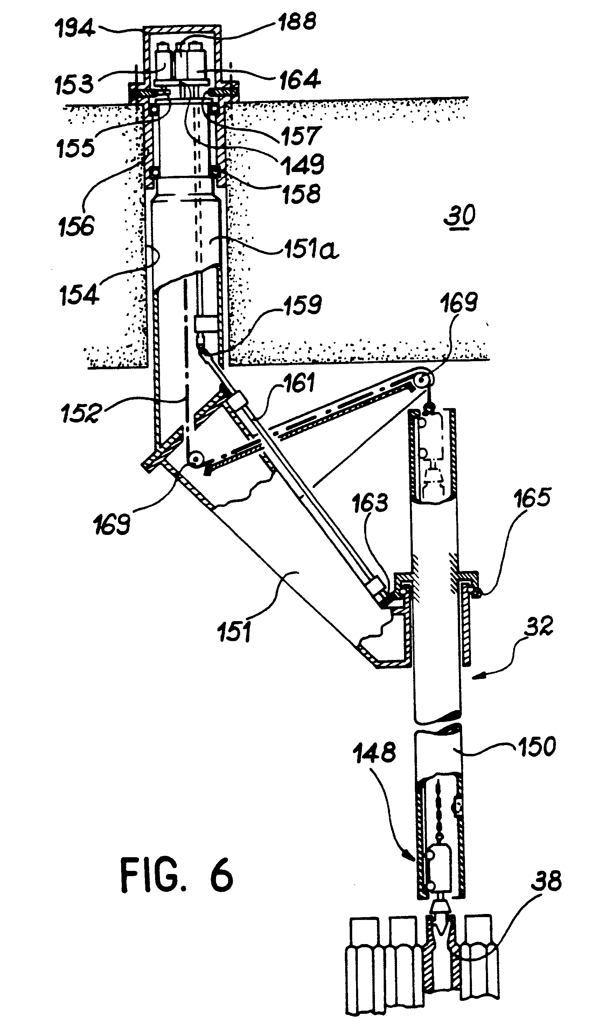

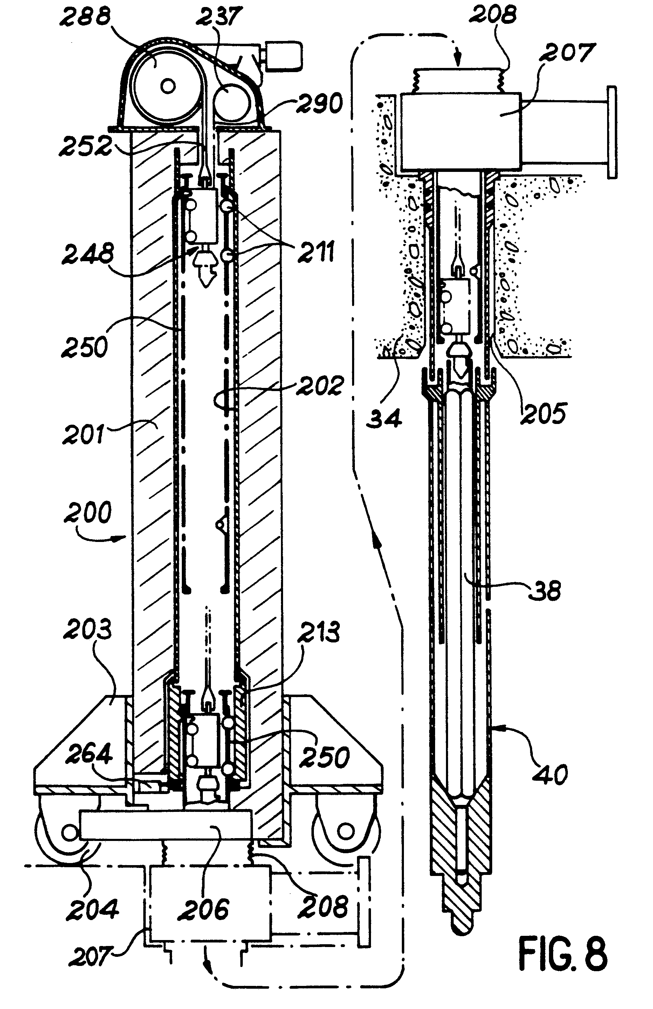

Comme l'illustrent les figures 6 et 7, le dispositif de manutention qui vient d'être décrit dans le cas d'un ringard 36 en se référant aux figures 2 à 5 peut aussi être utilisé pour réaliser un bras de manutention 32 utilisable par exemple dans le réacteur de la figure 1.

Ainsi, on retrouve sur la figure 6 un tube guide 150, d'axe vertical à l'intérieur duquel se déplace un grappin 148 comparable au grappin 48 décrit précédemment. Le tube guide 150 est supporté de façon tournante par une structure rigide 151, en forme d'équerre, qui est elle-même montée de façon tournante dans la dalle 12 du réacteur ou, plus précisément, dans le grand bouchon tournant 30. A cet effet, la structure rigide 151 comporte une partie sensiblement tubulaire 151a située dans un passage 154, d'axe vertical formé dans le bouchon 30 et décalé par rapport à l'axe du tube guide 150. Cette partie de la structure 151 est supportée de façon tournante, par l'intermédiaire de paliers 158, dans un manchon 156 fixé dans le passage 154.

On voit sur la figure 7 que la partie tubulaire 151a la structure 151 porte à son extrémité supérieure un plateau 149 sur lequel est reçu un premier motoréducteur 153 dont l'axe vertical entraîne un pignon 155 qui vient s'engréner dans une couronne dentée 157 solidaire du manchon fixe 156 et d'axe confondu avec l'axe vertical de la partie 151a. On comprend que la mise en oeuvre du motoréducteur 153 permet ainsi de réaliser la rotation de l'ensemble du bras 32 autour de l'axe vertical du passage 154.

Le plateau 149 supporte de plus un deuxième motoréducteur 164 commandant la rotation du tube guide 150 autour de son axe vertical propre, c'est-à-dire la préhension de l'assemblage par le grappin 148, et un troisième motoréducteur 188 commandant la montée et la descente du grappin 148 dans le tube guide par l'intermédiaire d'un lien souple tel qu'une chaîne 152.

La figure 6 montre de façon plus précise que, l'arbre vertical du motoréducteur 164 entraîne en rotation, par exemple par l'intermédiaire d'un joint homocinétique 159, un arbre incliné 161 supporté de façon tournante par le support 151 et dont l'extrémité inférieure porte un pignon 163 qui vient s'engréner sur une couronne dentée 165 solidaire du tube guide 150.

De façon comparable et comme l'illustrent également les figures 6 et 7, l'arbre de sortie vertical du motoréducteur 188 entraîne, par l'intermédiaire de pignons 167, une roue à empreintes 182, d'axe horizontal, sur laquelle est reçue la chaîne 152. L'une des extrémités de la chaîne 152 est fixée comme précédemment sur le grappin 148. La chaîne 152 chemine ensuite sur des roues lisses de renvoi 169 supportées par le support 151, avant d'être entraînée par la roue à empreintes 182. Comme précédemment, un puits de chaîne 184 permet de récupérer le brin mou de la chaîne 152.

Comme le montre notamment la figure 7, le plateau 149, ainsi que les motoréducteurs 153, 164 et 188, qu'il supporte sont situés juste au-dessus de la face supérieure du bouchon 30. L'étanchéité de la traversée de la dalle peut ainsi être aisément réalisée en logeant ces motoréducteurs dans un couvercle 194 fixé sur la face supérieure du bouchon 30.

Une autre possibilité consiste à intégrer l'ensemble des motoréducteurs dans la dalle.

Bien entendu, l'invention n'est pas limitée au mode de réalisation qui vient d'être décrit à titre d'exemple en se référant aux figures 2 à 7, mais en couvre toutes les variantes. Ainsi, la chaîne servant à commander la montée ou la descente du grappin à l'intérieur du tube de guidage peut être remplacée par tout autre lien souple équivalent tel qu'un câble. De même, le guidage du grappin à l'intérieur du tube guide peut être réalisé par tout moyen connu permettant simultanément de transmettre au grappin tout mouvement de rotation du tube guide.

D'autre part, bien que l'invention soit particulièrement adaptée à la réalisation d'un ringard et d'un bras de manutention prévus pour être utilisés à l'intérieur de la cuve d'un réacteur nucléaire à neutrons rapides, le dispositif selon l'invention peut aussi être utilisé dans d'autres applications et notamment afin d'assurer la manutention des assemblages de combustible nucléaire à l'intérieur d'une enceinte de stockage ou de transfert de ce combustible.

Ainsi, le dispositif de l'invention peut être adapté à une hotte destinée à la manutention en gaz des assemblages usés entre le réacteur et un poste de conditionnement, comme l'illustrent les figures 8 à 10.

La hotte de manutention 200 représentée sur la figure 8 peut notamment remplacer la hotte de manutention traditionnelle 44. Elle comporte un corps 201, par exemple en fonte, muni d'un alvéole interne gainé par un tube d'acier inoxydable 202 qui réalise l'étanchéité α. Le corps 201 repose sur un châssis 203 équipé de roues 204 lui permettant de se déplacer, par l'intermédiaire de rails (non représentés), sur la dalle 12 obturant la cuve du réacteur, entre un passage vertical 205 ménagé dans la dalle au-dessus de la rampe 42 (figure 1) et un passage (non représenté) surplombant un poste de conditionnement (non représenté). Une vanne α β 206 obture le bas de l'alvéole formée dans le corps 201, pendant le transport d'un assemblage. Simultanément, le passage 205 est obturé par une vanne α β 207. Le raccordement entre la hotte 200 et le réacteur est réalisé au moyen d'un soufflet 208, avant ouverture des vannes 206 et 207. Lorsqu'il parvient en-dessous du passage 205, l'assemblage irradié 38 est logé dans le pot de manutention 40, alors disposé verticalement.

Conformément à l'invention, un dispositif de manutention comportant un tube guide 250 et un grappin 248 est logé dans la hotte 200, pendant le transport, comme on l'a représenté en haut et sur la partie gauche de la figure 8. Le grappin 248 est identique au grappin 48 décrit précédemment en se référant aux figures 2 à 5. Le grappin 248 est suspendu à un câble 252, ou à tout dispositif analogue, enroulé sur un treuil 288 fixé en haut du corps 201 de la hotte. Comme on le verra ultérieurement, le treuil 288 assure également le hissage du tube guide 250 qui se distingue des tubes guide 50 et 150 décrits précédemment par le fait qu'il est mobile selon une direction verticale à l'intérieur du tube de gainage 202.

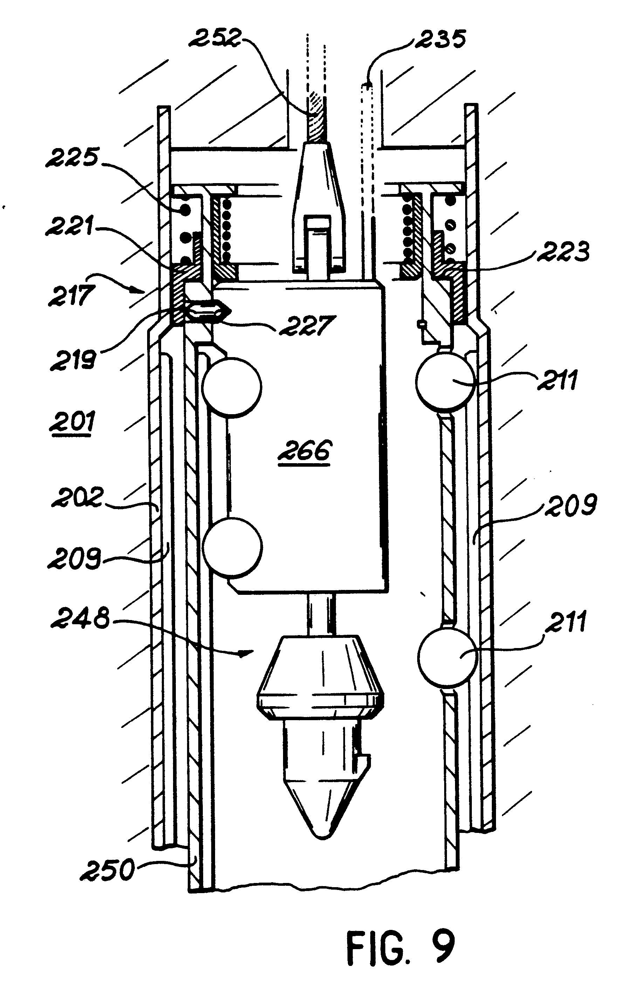

Afin de permettre ce déplacement vertical du tube guide 250 à l'intérieur du tube 202, celui-ci comporte deux séries de trois rails 209 (figure 9) disposés à 120° les uns par rapport aux autres, les rails des deux séries étant décalés de 60° pour tenir compte de la rotation de 60° du tube guide lors de la préhension d'un assemblage 38 par le grappin 248. Le tube guide 250 comporte à son extrémité supérieure trois paires de roulettes de guidage extérieures 211 décalées à 120°, qui prennent appui sur l'une ou l'autre des séries de rails 209, selon qu'un assemblage est accroché ou non au grappin.

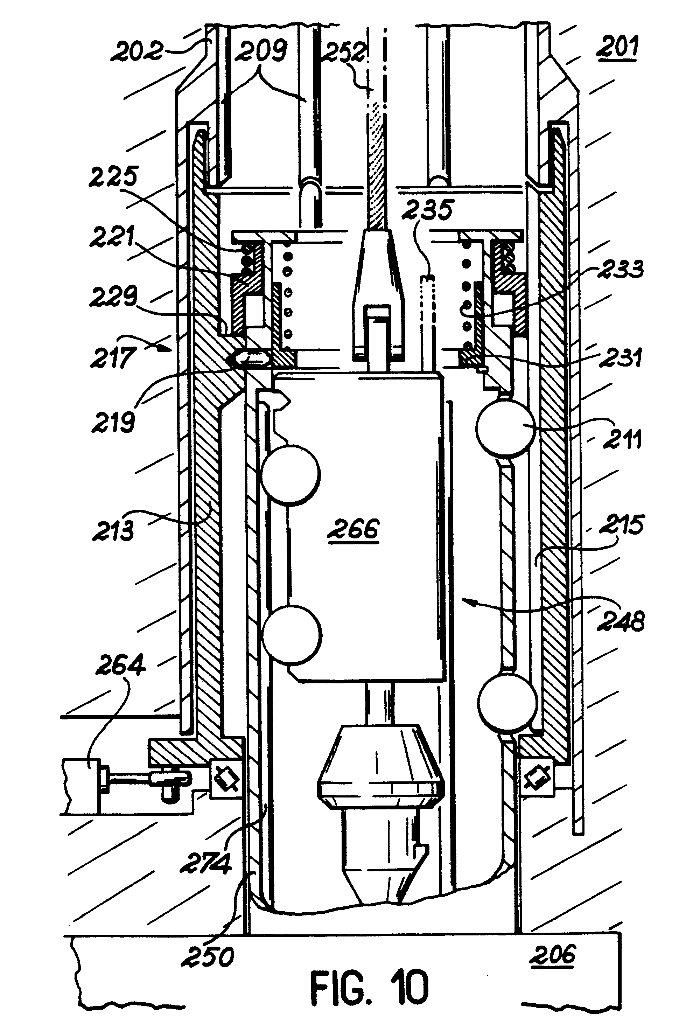

Au niveau du châssis 203, le tube de blindage 202 est évasé de façon à loger un cylindre tournant 213 dont la rotation de 60° dans l'un ou l'autre sens est commandée par un vérin 264. Le cylindre tournant 213 porte sur sa face interne trois rails 215 (figure 10) disposés à 120° et prolongeant l'une ou l'autre des séries de rails 209 du tube 202, selon la position occupée par ce cylindre 213. Comme on le voit en partie basse sur la moitié gauche de la figure 8 et, à plus grande échelle, sur la figure 10, lorsque le tube guide 250 est en position basse, ses trois paires de roulettes 211 sont sur les rails 215. La rotation du cylindre 213 a alors pour effet de faire tourner le tube guide 250 et, par conséquent, le grappin 248, commandant ainsi la préhension d'un assemblage lorsque ce dernier est en position basse, comme on le voit sur la partie droite de la figure 8.

Afin que le tube guide 250 soit solidaire du grappin 248 pendant la première partie de la descente de celui-ci, puis solidaire du cylindre 213 afin que le grappin puisse continuer à descendre jusqu'à l'extrémité inférieure du tube guide, un dispositif de verrouillage 217 est prévu.

Ce dispositif 217, représenté plus en détail sur les figures 9 et 10, comprend au moins un téton 219 disposé radialement dans un trou formé à la partie supérieure du tube guide 250. L'extérieur du trou est normalement obturé par un manchon 221 entourant la partie supérieure du tube guide et sollicité vers le bas contre un épaulement 223 par un ressort 225. Dans ces conditions, le téton 219 fait saillie hors du trou formé dans le tube guide, dans un évidement 227 formé à cet effet dans le corps 266 du grappin. Celui-ci est alors solidaire du tube guide 250.

Comme on le voit sur la figure 10, lorsque l'ensemble constitué par le tube guide 250 et par le grappin 248 arrive au niveau du cylindre tournant 213, le manchon 221 vient en appui sur un épaulement 229 formé sur le cylindre. Celui-ci s'escamote alors vers le haut à l'encontre du ressort 225, ce qui permet à l'extrémité externe du téton 219 de venir se placer dans un évidement 235 formé dans le cylindre 213.

Un second manchon 231 placé à l'intérieur du tube guide 250 est en appui sur la face supérieure du corps 266 du grappin 248 sous l'action d'un ressort 233. Dès que l'extrémité externe du téton à bouts ronds 219 est en vis-à-vis de l'évidement 235, le téton 219 est repoussé dans cet évidement sous l'action du ressort 233, et le grappin 248 commence à descendre à l'intérieur du tube guide 250, qui comporte à cet effet des rails de guidage 274, comme dans les modes de réalisation précédents. Ces rails de guidage ont également pour fonction de transmettre au grappin le mouvement de rotation du tube guide commandé par le vérin 264.

La hotte de manutention 200 représentée sur les figures 8 à 10 comporte en outre un circuit de refroidissement des assemblages par soufflage d'un gaz neutre tel que de l'argon à l'intérieur de l'assemblage contenu dans la hotte. Ce soufflage est réalisé au moyen d'un circuit fermé (non représenté), comprenant principalement un filtre à vapeurs de sodium, un échangeur de chaleur et un compresseur, qui sont doublés pour des raisons de sécurité. Parallèlement au câble de hissage 252, un flexible 290 (figure 8) amène le gaz de refroidissement au grappin 248. Un enrouleur automatique 237 récupère la course de ce flexible. Le flexible 235 est fixé sur le corps de grappin et prolongé à l'intérieur de ce dernier par un trou débouchant dans la tête de l'assemblage par un orifice formé dans le nez du grappin.

Bien entendu, la variante de réalisation qui vient d'être décrite à propos d'une hotte de manutention en se référant aux figures 8 à 10 peut encore s'appliquer à d'autres machines de manutention, sans sortir du cadre de l'invention.

Enfin, dans l'application de l'invention à un réacteur nucléaire à neutrons rapides, il est clair que l'invention peut être utilisée dans tous les réacteurs de ce type. En particulier, bien que la figure 1 représente un réacteur dit "intégré", dans lequel les pompes et les échangeurs sont logés dans la cuve du réacteur, les dispositifs de manutention décrits précédemment pourraient également être utilisés dans un réacteur dit "à boucles", dans lequel les échangeurs et, éventuellement, les pompes sont situés à l'extérieur de la cuve.

**Revendications**

1. Dispositif de manutention d'assemblages de combustible nucléaire comprenant un tube guide (50, 150, 250) d'axe sensiblement vertical, un grappin (48, 148, 248) capable de saisir un assemblage (38) et mobile en translation à l'intérieur du tube guide, des moyens de levage (88, 188, 288) pour déplacer le grappin à l'intérieur du tube guide par l'intermédiaire d'un moyen de liaison souple (52, 152, 252) caractérisé en ce que le grappin (48, 148, 248) est solidarisé en rotation avec ce tube et qu'il saisit ledit assemblage (38) en agissant sur un moyen d'actionnement (64, 163, 264) commandant la rotation de l'ensemble tube guide-grappin, ce dernier étant muni d'un nez de préhension (68) pourvu de moyens (76) pour saisir l'assemblage sous l'effet d'une rotation du grappin autour de l'axe du tube guide.

2. Dispositif selon la revendication 1, caractérisé en ce que le tube guide (50, 150, 250) comporte des moyens (98) de guidage de l'assemblage (38) interdisant la rotation de celui-ci dans le tube guide.

3. Dispositif selon la revendication 2, caractérisé en ce que les moyens de guidage (98) sont situés à un niveau tel qu'ils n'agissent sur l'assemblage (38) que lorsque celui-ci est dégagé d'un réseau (18) dans lequel il est normalement immobilisé en rotation, et en ce que le tube guide (50, 150) est monté directement de façon tournante sur un organe de supportage (56, 156).

4. Dispositif selon la revendication 2, caractérisé en ce que les moyens de guidage (98) sont situés à un niveau tel qu'ils agissent sur l'assemblage (38) lorsque celui-ci est encore engagé dans un réseau (18) dans lequel il est normalement immobilisé en rotation et en ce que le tube guide (50, 150) est monté de façon tournante sur un organe de supportage (56, 156) par l'intermédiaire de moyens de liaison autorisant un mouvement pendulaire.

5. Dispositif selon l'une quelconque des revendications précédentes, caractérisé en ce que le grappin (48) comporte un chariot (66) guidé par au moins un rail de guidage (74) à l'intérieur du tube guide, et des moyens de supportage (70) du nez de préhension (68) par le chariot autorisant un mouvement pendulaire du nez de préhension par rapport au chariot.

6. Dispositif selon la revendication 5, caractérisé en ce que le nez de préhension (68) comporte une partie inférieure (69) sensiblement cylindrique prévue pour pénétrer dans une collerette (80) formée à l'extrémité supérieure d'un passage (79) débouchant en haut de l'assemblage, un épaulement (71) prévu pour venir en appui sur l'extrémité supérieure de l'assemblage et des ergots (76) formés à l'extrémité inférieure de ladite partie (69) sensiblement cylindrique, prévus pour traverser des encoches (78) formés dans ladite collerette et pour venir se placer en prise avec celle-ci, après une rotation du nez de préhension.

7. Dispositif selon l'une quelconque des revendications précédentes, pour la manutention d'assemblages (38) de combustible nucléaire à l'intérieur de la cuve (10) d'un réacteur nucléaire à neutrons rapides contenant le coeur (18) du réacteur, ladite cuve étant obturée par une dalle (12) et des bouchons (30, 34) supportant ce dispositif, caractérisé en ce que les moyens de levage (88) et les moyens de préhension (64) sont placés dans un logement (54) situé dans l'épaisseur de l'un desdits bouchons, selon l'axe du tube guide (50), et obturé par un couvercle étanche (94).

8. Dispositif selon l'une quelconque des revendications précédentes, pour la manutention d'assemblages (38) de combustible nucléaire à l'intérieur de la cuve (10) d'un réacteur à neutrons rapides contenant le coeur (18) du réacteur, ladite cuve étant obturée par une dalle (12) et des bouchons (30, 34) supportant ce dispositif, caractérisé en ce que le tube guide (150) est supporté de façon tournante par une structure rigide (151) en forme d'équerre suspendue à la dalle par l'intermédiaire de moyens d'orientation (153) de ladite structure autour d'un deuxième axe vertical décalé par rapport à l'axe du tube guide, les moyens de levage (188), les moyens de préhension (164) et les moyens d'orientation (153) étant placés juste au-dessus ou à l'intérieur, d'un logement (154) situé dans l'épaisseur de l'un desdits bouchons, selon le deuxième axe vertical, sous un couvercle étanche (194) obturant ce logement.

9. Dispositif selon l'une quelconque des revendications précédentes, pour la manutention d'assemblages (38) de combustible nucléaire entre au moins deux postes surplombés par un dalle (12) comportant au moins un passage (205) au droit de chaque poste, caractérisé en ce que le tube guide (250) est logé dans une hotte (200) apte à se déplacer sur la dalle pour venir se placer successivement au-dessus de chaque ouverture, le tube guide (250) étant lui-même mobile en translation à l'intérieur de la hotte entre une position haute de transport et une position basse de préhension, lesdits moyens de préhension (264) étant en prise avec le tube guide (250) seulement lorsque celui-ci est en position basse.

10. Dispositif selon la revendication 9, caractérisé en ce que le tube guide (250) comporte à son extrémité supérieure au moins une série de roulettes externes (211) en appui sur l'une des deux séries de rails de guidage (209) à l'intérieur de la hotte (200), les moyens de préhension (264) commandant la rotation d'un cylindre (213) placé à l'extrémité inférieure de la hotte et comportant sur sa face interne une série de rails de guidage (274) sur lesquels viennent en appui lesdites roulettes externes (211) lorsque le tube guide est en position basse.

11. Dispositif selon la revendication 10, caractérisé en ce qu'il comprend des moyens (219 à 227) pour solidariser alternativement le grappin (248) du tube guide (250) lorsque ce dernier n'est pas en position basse et pour solidariser le tube guide (250) dudit cylindre (213) lorsque le tube guide est en position basse.

12. Assemblage de combustible nucléaire prévu pour être utilisé avec un dispositif de manutention selon la revendication 6, comprenant une tête d'assemblage (38a) et caractérisé en ce qu'une collerette (80) munie d'encoches (78) est formée à l'extrémité supérieure d'un passage axial (79) débouchant à l'extrémité supérieure de la tête d'assemblage.

**Patentansprüche**

1. Einrichtung zur Handhabung von Kernbrennstoffelementen, enthaltend ein Führungsrohr (50, 150, 250) mit im wesentlichen vertikaler Achse, einen Greifer (48, 148, 248), der in der Lage ist, ein Element (38) zu ergreifen und der translatorisch Hubeinrichtungen (88, 188, 288), um den Greifer im Inneren des Führungsrohrs über eine elastische Verbindungseinrichtung zu verstellen, dadurch gekennzeichnet, daß der Greifer (48, 148, 248) drehfest mit dem Rohr verbunden ist und daß er das genannte Element (38) ergreift, indem er auf eine Betätigungseinrichtung (64, 164, 264) einwirkt, die die Drehung der Anordnung aus Führungsrohr und Greifer steuert, wobei letzterer mit einer Greifnase (68) versehen ist, die Einrichtungen (76) aufweist, um das Element aufgrund einer Drehung des Greifers um die Achse des Führungsrohrs zu ergreifen.

2. Einrichtung nach Anspruch 1, dadurch gekennzeichnet, daß das Führungsrohr (50, 150, 250) Führungseinrichtungen (98) für das Element (38) aufweist, die die Drehung desselben in dem Führungsrohr verhindern.

3. Einrichtung nach Anspruch 2, dadurch gekennzeichnet, daß die Führungseinrichtungen (98) in einer solchen Höhe angeordnet sind, daß sie auf das Element (38) nur einwirken, wenn dieses von einem Gitter (18) getrennt ist, in welchem es normalerweise gegen Drehung festgehalten ist, und daß das Führungsrohr (50, 150) direkt drehbar an einem Tragelement (56, 156) montiert ist.

4. Einrichtung nach Anspruch 2, dadurch gekennzeichnet, daß die Führungseinrichtungen (98) in einer solchen Höhe angeordnet sind, daß sie auf das Element (38) einwirken, wenn dieses noch in einem Gitter (18) gehalten ist, in welchem es normalerweise gegen Drehung festgehalten ist und daß das Führungsrohr (50, 150) drehbar an einem Tragelement (56, 156) über Verbindungseinrichtungen gehalten ist, die eine vertikale Bewegung erlauben.

5. Einrichtung nach einem der vorhergehenden Ansprüche, dadurch gekennzeichnet, daß der Greifer (48) einen Schlittten (66) enthält, der mittels einer Führungsschiene (74) im Innern des Führungsrohrs geführt ist, sowie Abstützeinrichtungen (70) für die Greifnase (68) an dem Schlitten, die eine vertikale Bewegung der Greifnase gegenüber dem Schlitten erlauben.

6. Einrichtung nach Anspruch 5, dadurch gekennzeichnet, daß die Greifnase (68) einen im wesentlichen zylindrischen unteren Abschnitt (69) aufweist, der dazu vorgesehen ist, in eine Manschette (80) einzudringen, die am oberen Ende eines Durchgangs (79) ausgebildet ist, die oberhalb des Elements mündet, daß eine Schulter (71) vorgesehen ist, sich an das obere Ende des Elements anzulegen und daß Vorsprünge (76) am unteren Ende des genannten, im wesentlichen zylindrischen Abschnitts (69) ausgebildet sind, die dazu vorgesehen sind, in Ausnehmungen (78) einzutreten, die in der genannten Manschette ausgebildet sind und um nach einer Drehung der Greifnase die Manschette zu ergreifen.

7. Einrichtung nach einem der vorhergehenden Ansprüche für die Handhabung von Kernbrennstoffelementen (38) im Innern des Behälters (10) eines Kernreaktors mit schnellen Neutronen, der einen Reaktorkern (18) enthält, wobei der Behälter von einer Platte (12) und von die Einrichtung tragenden Deckeln (30, 34) verschlossen ist, dadurch gekennzeichnet, daß die Hubeinrichtungen (88) und die Greifeinrichtungen (64) in einer Kammer (54) angeordnet sind, die in der Wand einer der genannten Deckel in der Achse des Führungsrohrs (50) ausgebildet ist und von einem dichten Verschluß (94) abgeschlossen ist.

8. Einrichtung nach einem der vorhergehenden Ansprüche für die Handhabung von Kernbrennstoffelementen (38) im Innern des Behälters (10) eines Reaktors mit schnellen Neutronen, enthaltend einen Reaktorkern (18), wobei der genannte Behälter von einer Platte (12) und die Einrichtung tragenden Deckeln (30, 34) verschlossen ist, dadurch gekennzeichnet, daß das Führungsrohr (150) von einem starren Aufbau drehbar gehalten wird, der in Form eines Dreiecks ausgebildet ist und mittels Einrichtungen (153) zur Ausrichtung des genannten Aufbaus um eine vertikale Achse an dem Deckel aufgehängt ist, welche Achse gegenüber der Achse des Führungsrohrs versetzt ist, wobei die Hubeinrichtungen (188), die Greifeinrichtungen (164) und die Ausrichteinrichtungen (153) gerade oberhalb oder im Innern einer Kammer (154), die in der Wand eines der Deckel gelegen ist, in der zweiten vertikalen Achse unter einem dichten, die Kammer verschließenden Deckel (194) angeordnet sind.

9. Einrichtung nach einem der vorhergehenden Ansprüche für die Handhabung von Kernbrennstoffelementen (38) zwischen wenigstens zwei Pfosten, über denen sich eine Platte (12) erstreckt, die wenigstens einen Durchgang (205) neben jedem Pfosten aufweist, dadurch gekennzeichnet, daß das Führungsrohr (250) in in einem Aufsatz (200) angeordnet ist, der auf dem Deckel verschiebbar ist, um nacheinander über jeder Öffnung zu stehen, wobei das Führungsrohr (250) selbst translatorisch im Innern des Aufsatzes zwischen einer oberen Transportstellung und einer unteren Greifstellung beweglich ist, wobei die Greifeinrichtungen (264) mit dem Führungsrohr (250) nur dann in Eingriff sind, wenn letzteres sich in der tiefen Stellung befindet.

10. Einrichtung nach Anspruch 9, dadurch gekennzeichnet, daß das Führungsrohr (250) an seinem oberen Ende wenigstens eine Reihe äußerer Kugeln (211) aufweist, die an einer von zwei Serien von Führungsschienen (209) im Innern des Aufsatzes (200) anliegen, wobei die Greifeinrichtungen (264) die Drehung eines Zylinders (213) steuern, der am unteren Ende des Aufsatzes angeordnet ist und an seiner Innenfläche eine Serie von Führungsschienen (274) trägt, an die sich die genannten äußeren Kugeln (211) anliegen, wenn das Führungsrohr in seiner unteren Stellung ist.

11. Einrichtung nach Anspruch 10, dadurch gekennzeichnet, daß es Einrichtungen (219 bis 277) aufweist, um alternativ den Greifer (248) am Führungsrohr (250) festzulegen, wenn letzteres sich nicht in der tiefen Stellung befindet und um das Führungsrohr (250) am Zylinder (213) festzulegen, wenn das Führungsrohr in der tiefen Stellung ist.

12. Kernbrennstoffelement, das dazu vorgesehen ist, mit einer Handhabungsvorrichtung nach Anspruch 6 verwendet zu werden, enthaltend einen Elementkopf (38a), dadurch gekennzeichnet, daß eine mit Ausnehmungen (78) versehene Manschette (80) am oberen Ende eines axialen Durchgangs (79) ausgebildet ist, der in das obere Ende des Elementkopfes einmündet.

## Claims

1. Apparatus for handling nuclear fuel assemblies comprising a substantially vertically axed guide tube (50, 150, 250) and a grapnel (48, 148, 248), able to grasp an assembly (38), which is mobile in translation within the guide tube, lifting means (88, 188, 288) for displacing the grapnel within the guide tube by means of a flexible connecting means (52, 152, 252) by acting on an actuating means (64, 164, 264) controlling the rotation of the guide tube - grapnel unit, the latter being provided with a gripping nose (68) having means (76) for grasping the assembly under the effect of a rotation of the grapnel about the axis of the guide tube, characterized in that the grapnel (48, 148, 248) is integral in rotation with the said tube and grasps said assembly (38).

2. Apparatus according to claim 1, characterized in that the guide tube (50, 150, 250) comprises means (98) for guiding the assembly (38) preventing the rotation thereof in the guide tube.

3. Apparatus according to claim 2, characterized in that the guidance means (98) are located at a level such that they only act on the assembly (38) when the latter is disengaged from a lattice in which it is normally immobilized in rotation and in that the guide tube (50, 150) is directly mounted in rotary manner on a support member (56, 156).

4. Apparatus according to claim 2, characterized in that the guidance means (98) are at a level such that they act on the assembly (38) when the latter is still engaged in a lattice (18) in which it is normally immobilized in rotation and in that the guide tube (50, 150) is mounted in rotary manner on a support member (56, 156) via connection means permitting a swinging movement.

5. Apparatus according to any one of the preceding claims, characterized in that the grapnel (48) has a carriage (66) guided by at least one guide rail (74) within the guide tube, and means (70) for supporting the gripping nose (68) by the carriage permitting a swinging movement of the gripping nose relative to the carriage.

6. Apparatus according to claim 5, characterized in that the gripping nose (68) has a lower substantially cylindrical portion (69) for penetrating a flange (80) formed at the upper end of a passage (79) issuing at the top of the assembly, a shoulder (71) for bearing on the upper end of the assembly and lugs (76) formed at the lower end of the said substantially cylindrical portion (69) for traversing notches (78) formed in the flange and for engaging therewith, following a rotation of the gripping nose.

7. Apparatus according to any one of the preceding claims for the handling of nuclear fuel assemblies (38) within the vessel (10) of a fast neutron nuclear reactor containing the reactor core, said core (18) being sealed by a slab (12) and plugs (30, 34) supporting said apparatus, characterized in that the lifting means (88) and the gripping means (64) are placed in a recess (54) located in the thickness of one of said plugs, in accordance with the axis of the guide tube (50) and sealed by a tight cover (94).

8. Apparatus according to any one of the preceding claims for the handling of nuclear fuel assemblies (38) within the vessel (10) of a fast neutron reactor containing the reactor core (18), said vessel being sealed by a slab (12) and plugs (30, 34) supporting said apparatus, characterized in that the guide tube (150) is supported in rotary manner by a square-shaped rigid structure (151) suspended on the slab by means (153) for orienting the said structure about a second vertical axis displaced with respect to the axis of the guide tube, the lifting means (188), the gripping means (164) and the orientation means (153) being positioned just above or within a recess (154) located in the thickness of one of said plugs, along the second vertical axis, under a tight cover (194) sealing said recess.

9. Apparatus according to any one of the preceding claims for handling nuclear fuel assemblies (38) between at least two stations overhung by a slab (12) having at least one passage (205) to the right of each station, characterized in that the guide tube (250) is located in a hod (200) able to move on the slab, so that it is successively placed above each opening, the guide tube (250) being mobile in translation within the hod between an upper transportation position and a lower gripping position, the gripping means (264) engaging with the guide tube (250) only when the latter is in the lower position.

10. Apparatus according to claim 9, characterized in that the guide tube (250) has at its upper end at least one row of outer runners (211) bearing on one of the two series of guide rails (209) within the hod (200), the gripping means (264) controlling the rotation of a cylinder (213) placed at the lower end of the hod and having on its inner face a series of guide rails (274) on which bear the said outer runners (211) when the guide tube is in the lower position.

11. Apparatus according to claim 10, characterized in that it comprises means (219 to 227) for alternatively fixing the grapnel (248) to the guide tube (250) when the latter is not in the lower position and for fixing the guide tube (250) to the cylinder (213) when the guide tube is in the lower position.

12. Nuclear fuel assembly for use with a handling apparatus according to claim 6, comprising an assembly head (38a) and characterized in that a flange (80) provided with notches (78) is formed on the upper end of an axial passage (79) issuing into the upper end of the assembly head.

FIG. 1

FIG. 2

FIG. 7

FIG. 3

FIG. 4

FIG. 5

FIG. 6

FIG. 8

FIG. 9

**FIG. 10**